# EUROPEAN PATENT APPLICATION

(11) **EP 4 082 912 A1**
(43) Date of publication of application: **02.11.2022**
(21) Application number: 22165944.4
(22) Date of filing: 31.03.2022
(51) Int. Cl.: B64D 27/24, B64D 37/00, B64D 37/30, B64D 37/34, F16K 49/00, F16L 53/32, B64C 29/00

(54) **FLIGHT VEHICLE**

(30) Priority: 26.04.2021 JP 2021074382
(71) Applicant: TOYOTA JIDOSHA KABUSHIKI KAISHA, Toyota-shi, Aichi-ken, 471-8571 (JP)
(72) Inventor: KANEKO, Tomohiko, Toyota-shi, 471-8571 (JP)
(74) Representative: D Young & Co LLP

(57) **Abstract**

Provided is a flight vehicle (1) which makes it possible to more reliably retain the sealability of a sealing member of a valve (22) provided on a hydrogen tank (21) even in continuous supply of hydrogen or a low-temperature environment. The flight vehicle having a fuel cell (10), and a hydrogen tank (21) in which hydrogen for generation of electricity by the fuel cell (10) is stored includes:
a valve (22) including a sealing member, the valve (22) being disposed on the hydrogen tank (21), via the valve (22) hydrogen being taken out from a body (21a) of the tank;
and a warming unit (70A, 70B, 70C, 70D) in which fluid conducts part of waste heat from any portion of the flight vehicle to the sealing member.

## Description

### FIELD

The present disclosure relates to a flight vehicle.

### BACKGROUND

Patent Literatures 1 and 2 disclose technology of applying a fuel cell system to an aircraft. Patent Literature 3 discloses heat utilization equipment for an aircraft. Patent Literature 4 discloses a technique of supplying heat to a fuel storage part.

### CITATION LIST

### Patent Literature

Patent Literature 1: JP 2013-545649 A
Patent Literature 2: JP 2017-81559 A
Patent Literature 3: JP 2002-46696 A
Patent Literature 4: JP 2014-49345 A

### SUMMARY

### Technical Problem

In a flight vehicle using a fuel cell as a power source for flight, continuous supply of hydrogen that is to be fuel for the flight vehicle results in a lowered temperature of a sealing member provided on a valve of a tank where the hydrogen is stored, to deteriorate the sealability, which is problematic. Particularly, it is demanded to reliably prevent the hydrogen from leaking not only in the condition of continuous supply of the hydrogen but also in a severe low-temperature environment at high altitude in flight.

In view of the above problem, an object of the present disclosure is to provide a flight vehicle that makes it possible to more reliably retain the sealability of a sealing member of a valve provided on a hydrogen tank even in continuous supply of hydrogen or a low-temperature environment.

### Solution to Problem

The present application discloses a flight vehicle having a fuel cell, and a hydrogen tank in which hydrogen for the generation of electricity by the fuel cell is stored, the flight vehicle comprising: a valve including a sealing member, the valve being disposed on the hydrogen tank, via the valve hydrogen being taken out from a body of the tank; and a warming unit in which fluid conducts part of waste heat from any portion of the flight vehicle to the sealing member.

The valve may include a flow path through which the fluid flows.

At least part of cooling water that has cooled the fuel cell may be used as the fluid.

Gas emitted from the fuel cell may be used as the fluid.

Part of air discharged from an air compressor and to be sent to the fuel cell may be used as the fluid.

The cooling water that has cooled at least one of a motor, an inverter and a converter may be used as the fluid.

### Advantageous Effects

A flight vehicle according to the present disclosure makes it possible to more reliably retain the sealability of a sealing member of a valve provided on a hydrogen tank even in continuous supply of hydrogen or a low-temperature environment.

### BRIEF DESCRIPTION OF DRAWINGS

Fig. 1 shows an external appearance of an aircraft 1 that is one aspect of a flight vehicle;
Fig. 2 is a conceptual view explanatorily showing a configuration for the generation of electricity by a fuel cell 10;
Fig. 3 is a conceptual view explanatorily showing the relationship among devices driven by the fuel cell 10;
Fig. 4 explanatorily shows a warming unit 70A;
Fig. 5 explanatorily shows one example of the configuration for warming the valve 22;
Fig. 6 explanatorily shows another example of the configuration for warming the valve 22;
Fig. 7 explanatorily shows a warming unit 70B;
Fig. 8 explanatorily shows a warming unit 70C; and
Fig. 9 explanatorily shows a warming unit 70D.

### DESCRIPTION OF EMBODIMENTS

### 1. Basic Configuration of Flight Vehicle

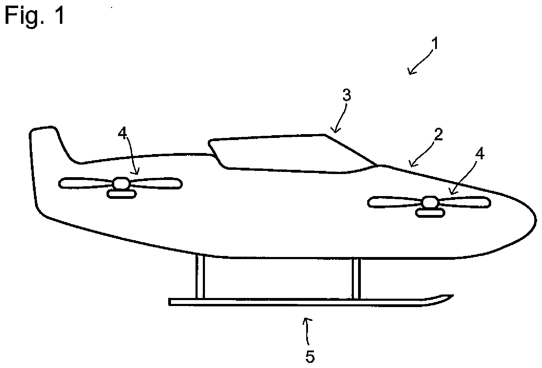

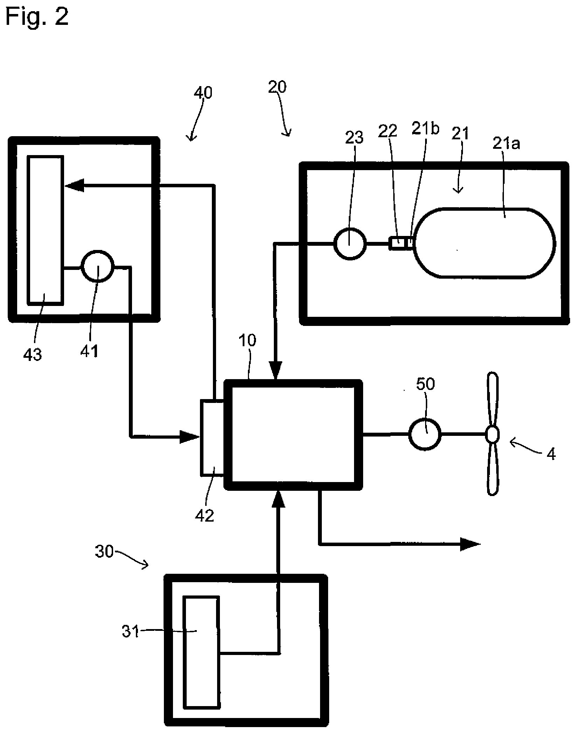

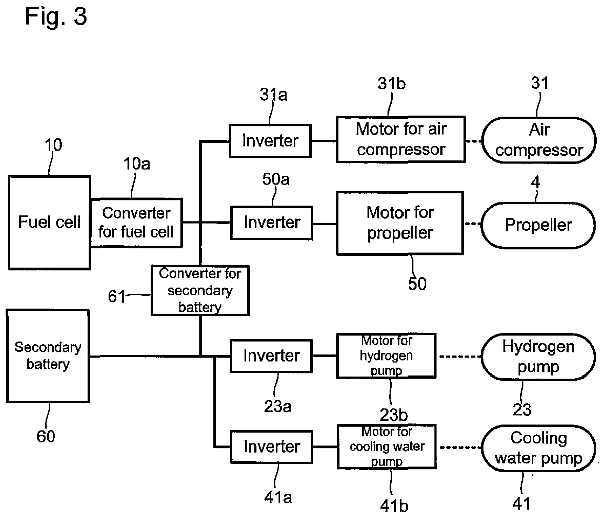

Figs. 1 to 3 explanatorily show a basic configuration of a flight vehicle (aircraft 1) with a fuel cell as a power source for flight according to one example. Fig. 1 shows an external appearance of this flight vehicle (aircraft 1). Fig. 2 schematically shows a configuration for the generation of electricity by the fuel cell provided in the flight vehicle (aircraft 1). Fig. 3 schematically shows an aspect of the electric connection between each structure.

The aircraft 1 will be described here as one embodiment of the flight vehicle. The scope of the flight vehicle according to the present disclosure may include various embodiments of a flight vehicle as long as a fuel cell is used therein as a power source for a propeller, and the external appearance thereof, the position of the propeller, the number of the propeller(s), etc. are not particularly limited. Accordingly, the size, the capacity, etc. of the flight vehicle according to the present disclosure, that is, the scale of the flight vehicle is not limited. The scope of the flight vehicle according to the present disclosure also includes a drone etc. that are unmanned flight vehicles which are wirelessly operated or into which flight routes are programmed in advance, to fly.

### 1.1. External Appearance

As can be seen in Fig. 1, the aircraft 1 according to the present embodiment is provided with a body 2 that is a housing for housing thereinside each component necessary for flight, and a cockpit 3 on an upper portion of the body 2 which is for a person to get into to pilot the flying vehicle 1. On the aircraft 1 according to the present embodiment, propellers 4 for taking-off and propulsion of the aircraft 1 which are four in total are arranged: the four propellers 4 are respectively in the left front, right front, left back and right back of the body 2. Further, a leg part 5 that grounds when the aircraft lands, to support the body 2 is provided on a lower portion of the body 2.

### 1.2. Generation of Electricity by Fuel Cell

The flight vehicle (aircraft 1) according to the present disclosure is configured to drive the propellers by the electric power generated by the fuel cell, thereby obtaining power necessary for flight. Therefore, as can be seen in Fig. 2, a fuel cell 10 is electrically connected to a motor for propellers 50, and the propellers 4 are driven by this motor 50. Hydrogen from a hydrogen supply system 20 and air from an air supply system 30 are supplied to the fuel cell 10, whereby the fuel cell 10 generates electricity. Cooling water is supplied from a circulating cooling water system 40 to the fuel cell 10, to cool the fuel cell 10. Each structure will be described below.

### 1.2a. Fuel Cell

The fuel cell 10 is as is known. For example, the fuel cell 10 is formed by housing a fuel cell stack of plural stacked fuel cells in a case for a stack. The plural fuel cells are each formed of a membrane-electrode assembly (MEA) held between two separators. The MEA is a layered product of a solid polymer membrane, an anode catalyst layer, a cathode catalyst layer, an anode gas diffusion layer, a cathode gas diffusion layer, etc.

### 1.2b. Hydrogen Supply System

The hydrogen supply system 20 is a system supplying hydrogen to the fuel cell 10 via piping. The hydrogen supply system 20 is as is known, and is provided with a hydrogen tank 21, a valve 22 and a hydrogen pump 23.

The hydrogen tank 21 is a tank in which hydrogen is stored, and is provided with a hydrogen tank body 21a in the form of a container, and a mouthpiece 21b whereby hydrogen stored in the hydrogen tank body 21a is taken out via the mouthpiece 21b.

The valve 22 is attached to the mouthpiece 21b for controlling hydrogen so that the hydrogen enters or exits the hydrogen tank 21. A sealing member preventing the hydrogen from leaking is disposed on the valve 22. The sealing member is not particularly limited, but an O-ring made from a resin or a rubber is often used therefor. When a warming unit described later is applied to the sealing member using a resin or a rubber, the sealing member particularly exerts the effect of retaining the sealability.

The hydrogen pump 23 is a pump by which the hydrogen taken out of the hydrogen tank 21 via the valve 22 is fed to the fuel cell 10. The specific aspect of the hydrogen pump 23 is not particularly limited. A known hydrogen pump applied to a power generation system by a fuel cell may be applied to the hydrogen pump 23.

### 1.2c. Air Supply System

The air supply system 30 is a system supplying air to the fuel cell 10 via piping. The air supply system 30 is as is known, and is provided with an air compressor 31. The air compressor 31 takes in and compresses ambient air, to feed the air to the fuel cell 10. The specific aspect of the air compressor 31 is not particularly limited. A known air compressor applied to a power generation system by a fuel cell may be applied to the air compressor 31.

### 1.2d. Circulating Cooling Water System

The circulating cooling water system 40 circulates cooling water via piping to supply the cooling water to the fuel cell 10 and collect the cooling water that has cooled the fuel cell 10, to emit heat to the outside air. The circulating cooling water system 40 is as is known, and is provided with a cooling water pump 41, a heat exchanger for cooling 42 and a radiator 43.

The cooling water pump 41 is a pump by which cooling water is circulated. A known one may be used.

The heat exchanger for cooling 42 is disposed on the fuel cell 10. The heat exchanger 42 absorbs the heat caused by the generation of electricity by the fuel cell 10, thereby cooling the fuel cell 10. The specific aspect of the heat exchanger for cooling 42 is not particularly limited. A known heat exchanger for cooling which is applied to a power generation system by a fuel cell may be applied to the heat exchanger 42.

The radiator 43 is a heat exchanger from which the heat absorbed from the fuel cell 10 is radiated to the outside air. According to the foregoing, the heat from the cooling water including the heat absorbed from the fuel cell 10 is emitted to the outside air, so that the cooling water can cool the fuel cell 10 again. The specific aspect of the radiator 43 is not particularly limited. A known radiator applied to a power generation system by a fuel cell may be applied to the radiator 43.

With the configuration as described above, cooling water passes through each structure via the piping, to circulate as follows. The cooling water arriving at the heat exchanger for cooling 42 by means of the cooling water pump 41 absorbs the heat from the fuel cell 10, and moves to the radiator 43. The cooling water arriving at the radiator 43 emits the heat absorbed from the fuel cell 10 to the outside air, and reaches the cooling water pump 41 again.

### 1.3. Driving by Generated Electricity

Fig. 3 schematically shows the relationship among structures driven using the electric power generated by the fuel cell 10.

The propellers 4 are driven by the motor for propellers 50, using the electric power generated by the fuel cell 10 via a converter for a fuel cell 10a, and an inverter 50a. Power for flight is obtained by driving the propellers 4.

The cooling water pump 41 is driven by a motor for a cooling water pump 41b, using the electric power generated by the fuel cell 10 via the converter for a fuel cell 10a, and an inverter 41a. The cooling water pump 41 is driven, whereby cooling water circulates through the circulating cooling water system 40 as described above.

The air compressor 31 is driven by a motor for an air compressor 31b, using the electric power generated by the fuel cell 10 via the converter for a fuel cell 10a, and an inverter 31a. The air compressor 31 is driven, whereby air is supplied from the air supply system 30 to the fuel cell 10 as described above.

The hydrogen pump 23 is driven by a motor for a hydrogen pump 23b, using the electric power generated by the fuel cell 10 via the converter for a fuel cell 10a, and an inverter 23a. The hydrogen pump 23 is driven, whereby hydrogen is supplied from the hydrogen supply system 20 to the fuel cell 10 as described above.

An electric system for the driving with the generated electricity includes a secondary battery 60 provided in the aircraft 1. The secondary battery 60 is also electrically connected to each of the motor for an air compressor 31b, the motor for propellers 50, the motor for a cooling water pump 41b, and the motor for a hydrogen pump 23b via a converter 61 for a secondary battery and/or the inverters 23a, 31a, 41a and 50a.

Electric power is supplied by the secondary battery 60 when the aircraft 1 is started, and other than this, may be also supplied in case of emergency. The secondary battery 60 is made so as to be able to be charged with the electric power from the fuel cell 10.

### 2. Warming Unit

As described above, the aircraft 1 includes the hydrogen supply system 20 for supplying hydrogen to the fuel cell 10. The valve 22 is disposed on the hydrogen tank 21 in the hydrogen supply system 20. A sealing member is provided on the valve 22 so that hydrogen does not leak.

Heat is removed from the valve 22 and thus the temperature of the valve 22 lowers since hydrogen continuously passes through the valve 22 for a long time. Furthermore, the surroundings of the aircraft 1 are at a lower temperature than the ground most of the time during the movement (flight), and thus the temperature of the valve 22 further lowers. The valve 22 of a lowered temperature causes the temperature of the sealing member provided thereon to lower as well, which may lead to deteriorated sealability. Especially when the sealing member is made from a resin or a rubber, such a tendency is remarkable. The deterioration of the sealability is associated with the risk of the leakage of hydrogen, and thus has to be avoided.

Thus, in the present disclosure, a warming unit is provided whereby the sealing member is warmed and the sealability is retained. The warming unit is made in such a way that fluid therein conducts part of waste heat from any portion of the flight vehicle (aircraft 1) to the sealing member. According to this, the sealing member can be warmed without an additional heat source for the warming, and the components of the flight vehicle can be simplified and the weight thereof can be reduced. Specific embodiments of the warming unit will be described below.

### 2.1. Embodiment 1

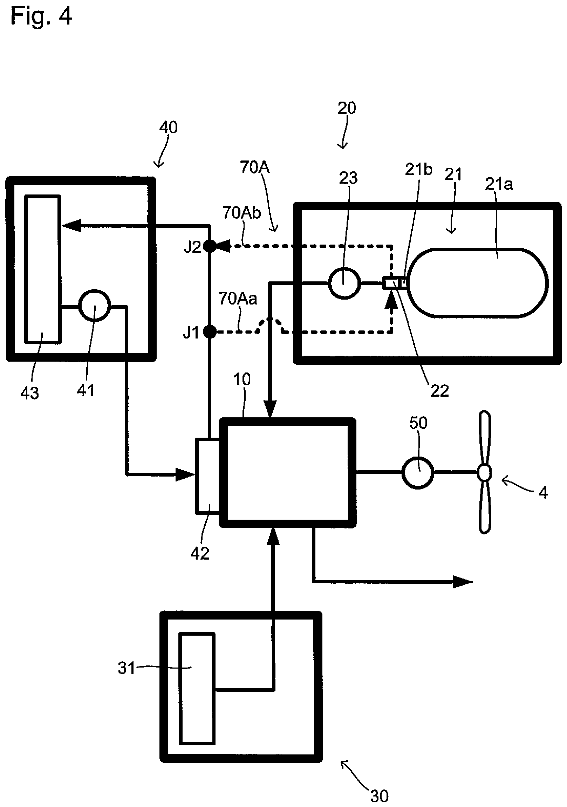

Fig. 4 explanatorily shows a warming unit 70A according to the embodiment 1. The warming unit 70A supplies part of the cooling water to the valve 22 via piping connected to the circulating cooling water system 40, to warm the sealing member with the heat of the cooling water. Specifically, the warming unit 70A lets part of the cooling water flow to the valve 22 via a pipe 70Aa connected at J1 to the piping through which the cooling water flowing out of the heat exchanger for cooling 42 flows. Furthermore, a pipe 70Ab extending from the valve 22 is connected at J2 to the piping of the circulating cooling water system 40. Here, the joint J2 is arranged so as to be on a further side from the heat exchanger for cooling 42 than the joint J1, in the circulating direction of the cooling water in the circulating cooling water system 40. This makes it possible for the cooling water that has cooled the fuel cell 10 and warmed to be offered to the valve 22 to warm the sealing member. The cooling water that has warmed the sealing member returns to the circulating cooling water system 40, and heat is suitably treated therein.

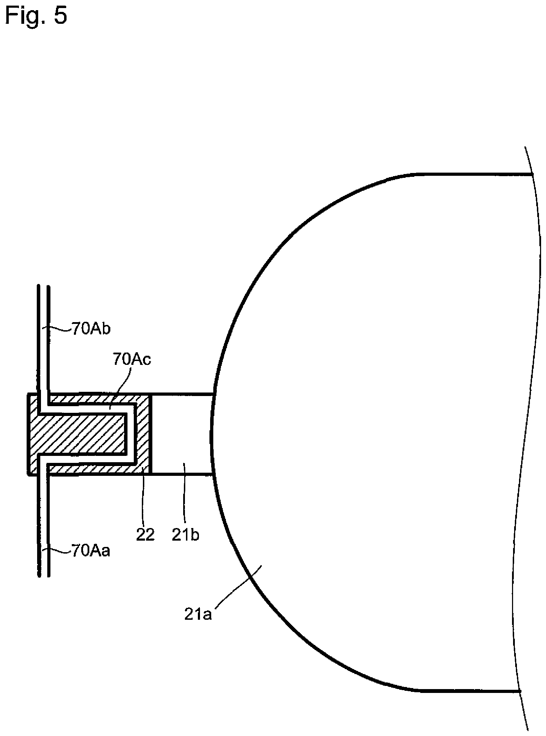

The specific way of the heat exchange between the valve 22 and the cooling water is not particularly limited. An example of the aspect of such heat exchange is, as shown in Fig. 5, to provide a flow path 70Ac inside the valve 22, and connect the flow path 70Ac to the pipe 70Aa and the pipe 70Ab.

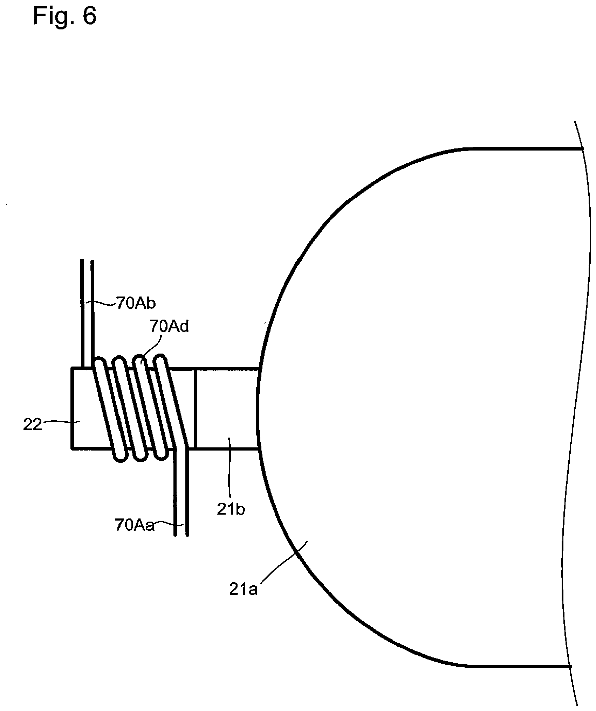

Another example of the aspect of such heat exchange is, as shown in Fig. 6, to provide a coiled pipe 70Ad so that the pipe 70Ad is coiled around the outer circumstance of the valve 22, and connect the pipe 70Ad to the pipe 70Aa and the pipe 70Ab.

According to this embodiment, the sealing member of the valve 22 can be suitably warmed, using the heat (waste heat) from the cooled fuel cell 10. The use of the waste heat from the fuel cell 10 for warming the sealing member makes it possible to reduce the burden of the heat exchange in the radiator 43, which may make it possible to reduce the size of the radiator 43.

### 2.2. Embodiment 2

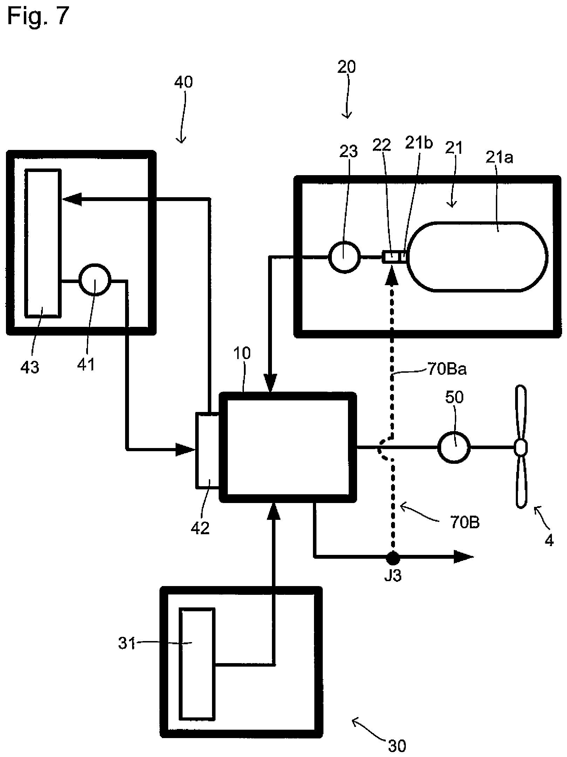

Fig. 7 explanatorily shows a warming unit 70B according to the embodiment 2. The warming unit 70B supplies part of exhaust in an exhaust pipe to the valve 22 via piping connected to the exhaust pipe, to warm the sealing member with the heat of the exhaust. Specifically, the warming unit 70B lets the exhaust that is from the fuel cell 10, flow to the valve 22 via a pipe 70Ba connected at J3 to piping through which the exhaust flows. This makes it possible for the exhaust from the fuel cell 10 to be offered to the valve 22 to warm the sealing member.

The specific way of the heat exchange between the valve 22 and the exhaust is not particularly limited. For example, as shown in Fig. 5 as described above, one may provide the flow path 70Ac inside the valve 22, and pass the exhaust through the flow path 70Ac from the pipe 70Ba.

Another example of the aspect of such heat exchange is, as shown in Fig. 6 as described above, to provide the coiled pipe 70Ad so that the pipe 70Ad is coiled around the outer circumstance of the valve 22, and connect the pipe 70Ba to the pipe 70Ad.

Further, one may let the exhaust jet from the pipe 70Ba directly or, for example, via a nozzle provided on an end of the pipe 70Ba, so that the exhaust hits the valve 22.

According to this embodiment, the sealing member of the valve 22 can be suitably warmed, using the heat (waste heat) of the exhaust from the fuel cell 10. In addition, the warming is performed by gas according to this embodiment. Thus, the gas that has warmed the sealing member may be emitted as it is, but does not need to be collected, which makes it possible to simplify the configuration.

### 2.3. Embodiment 3

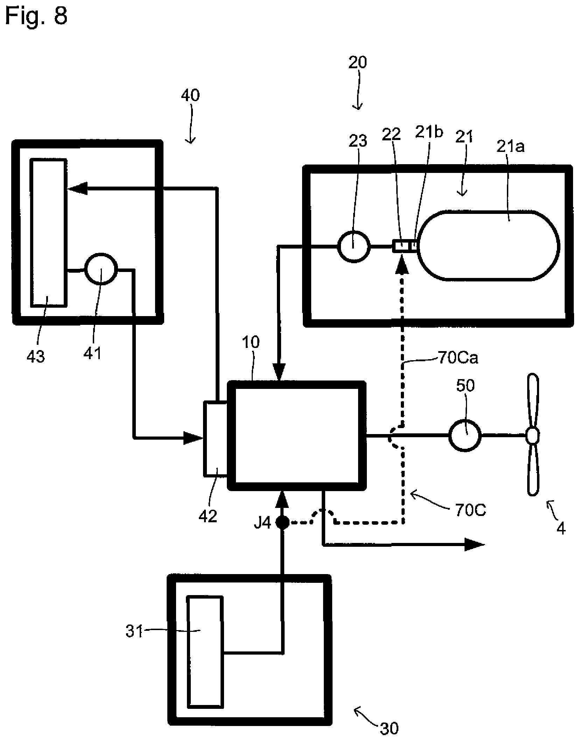

Fig. 8 explanatorily shows a warming unit 70C according to the embodiment 3. The warming unit 70C connects to the piping via which air is supplied from the compressor 31 of the air supply system 30 to the fuel cell 10, to supply part of this air to the valve 22 to warm the sealing member with the heat of the air. Specifically, the warming unit 70C lets the air flow to the valve 22 via a pipe 70Ca connected at J4 to the piping through which the air is supplied from the air compressor 31 to the fuel cell 10. This makes it possible for the air from the compressor 31 to be offered to the valve 22 to warm the sealing member.

The specific way of the heat exchange between the valve 22 and the air from the air compressor 31 is not particularly limited. For example, as shown in Fig. 5 as described above, one may provide the flow path 70Ac inside the valve 22, and pass the air through the flow path 70Ac from the pipe 70Ca.

Another example of the aspect of such heat exchange is, as shown in Fig. 6 as described above, to provide the coiled pipe 70Ad so that the pipe 70Ad is coiled around the outer circumstance of the valve 22, and connect the pipe 70Ca to the pipe 70Ad.

Further, one may let the air jet from the pipe 70Ca directly or, for example, via a nozzle provided on an end of the pipe 70Ca, so that the air hits the valve 22.

According to this embodiment, the sealing member of the valve 22 can be suitably warmed, using the air from the compressor 31. The warming is performed by gas according to this embodiment. Thus, the gas that has warmed the sealing member may be emitted as it is, but does not need to be collected, which makes it possible to simplify the configuration. In addition, the temperature of the air compressed by the air compressor 31 is increased, and this is used. Thus, this is also a kind of the utilization of waste heat. Further, the valve 22 can be efficiently warmed since the air of a high temperature can be supplied to the valve 22.

### 2.4. Embodiment 4

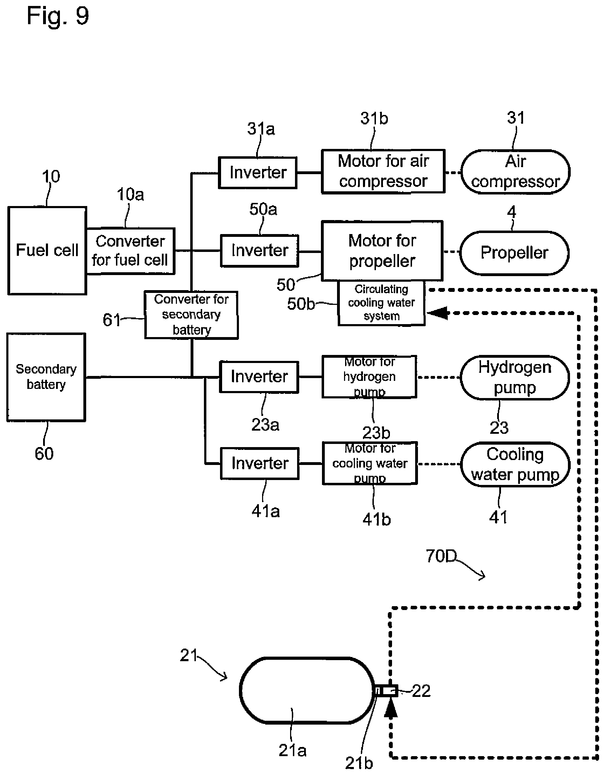

Fig. 9 explanatorily shows a warming unit 70D according to the embodiment 4. The warming unit 70D supplies part of the cooling water to the valve 22 via piping connected to a circulating cooling water system 50b for cooling the motor for propellers 50, to warm the sealing member with the heat of the cooling water. The specific aspect of the warming unit 70D is not particularly limited, but may be considered the same as the above described warming unit 70A according to the embodiment 1. Only an object to be cooled by the cooling water is different from, but the basic idea is the same as the warming unit 70A.

Such a circulating cooling water system may be provided on the converter for a fuel cell 10a, the converter 61 for a secondary battery, and the inverters 23a, 31a, 41a and 50a, in addition to the circulating cooling water system for the motor for propellers. In this case, the valve 22 may be warmed using the cooling water of these circulating cooling water system. The flow rate of the cooling water is low in such a circulating cooling water system, which makes it possible to reduce the weight of the piping.

### 3. Miscellaneousness

There is no particular limitation on the timing of warming the sealing member by means of the warming unit. The sealing member may be continuously warmed as long as not melting due to the warming, or as long as the temperature thereof becomes high so as to cause rapid deterioration to cause the sealability to be lost.

The usual hydrogen supply system 20 may be provided with a unit (known temperature sensor) measuring the temperature of the hydrogen tank 21. In this case, one may estimate the temperature of the sealing member from the temperature of the hydrogen tank, using such a known temperature sensor, and pass fluid only when necessary, so that the sealing member is warmed to raise the temperature thereof. The present disclosure is not limited to the this, but a sensor measuring the temperature of the valve 22 or the sealing member may be additionally provided.

### Reference Signs List

1 aircraft (flight vehicle)
2 body
3 cockpit
4 propeller
5 leg part
10 fuel cell
20 hydrogen supply system
21 hydrogen tank
22 valve
23 hydrogen pump
30 air supply system
31 compressor
40 circulating cooling water system
41 cooling water pump
42 heat exchanger for cooling
43 radiator
50 motor for a propeller
70A to 70D warming unit

## Claims

1. A flight vehicle having a fuel cell, and a hydrogen tank in which hydrogen for generation of electricity by the fuel cell is stored, the flight vehicle comprising:
a valve including a sealing member, the valve being disposed on the hydrogen tank, via the valve the hydrogen being taken out from a body of the tank; and
a warming unit in which fluid conducts part of waste heat from any portion of the flight vehicle to the sealing member.

2. The flight vehicle according to claim 1, wherein the valve includes a flow path through which the fluid flows.

3. The flight vehicle according to claim 1 or 2, wherein at least part of cooling water that has cooled the fuel cell is used as the fluid.

4. The flight vehicle according to claim 1 or 2, wherein gas emitted from the fuel cell is used as the fluid.

5. The flight vehicle according to claim 1 or 2, wherein part of air discharged from an air compressor and to be sent to the fuel cell is used as the fluid.

6. The flight vehicle according to claim 1 or 2, wherein the cooling water that has cooled at least one of a motor, an inverter and a converter is used as the fluid.
